(19)

Europäisches
Patentamt
European
Patent Office
Office européen
des brevets

(11) **EP 4 401 432 A1**

(12) **EUROPEAN PATENT APPLICATION**
published in accordance with Art. 153(4) EPC

(43) Date of publication:
**17.07.2024 Bulletin 2024/29**

(21) Application number: **22885560.7**

(22) Date of filing: **27.09.2022**

(51) International Patent Classification (IPC):
**H04W 4/44** (2018.01)

(52) Cooperative Patent Classification (CPC):
**Y02D 30/00**

(86) International application number:
**PCT/CN2022/121897**

(87) International publication number:
**WO 2023/071675 (04.05.2023 Gazette 2023/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.10.2021 CN 202111266759**

(71) Applicant: **Huawei Technologies Co., Ltd.
Shenzhen, Guangdong 518129 (CN)**

(72) Inventors:
- **YANG, Yong
  Shenzhen, Guangdong 518129 (CN)**
- **ZHANG, Yawei
  Shenzhen, Guangdong 518129 (CN)**
- **ZHANG, Jian
  Shenzhen, Guangdong 518129 (CN)**
- **SUN, Mingyang
  Shenzhen, Guangdong 518129 (CN)**

(74) Representative: **Körber, Martin Hans
  Mitscherlich PartmbB
  Patent- und Rechtsanwälte
  Karlstraße 7
  80333 München (DE)**

(54) **COMMUNICATION METHOD AND APPARATUS, AND DEVICE AND STORAGE MEDIUM**

(57) This application provides a communication method, apparatus, and device, and a storage medium. The communication method includes: An access device determines a first throughput rate of a backhaul link at a first moment. The first throughput rate includes an uplink throughput rate and/or a downlink throughput rate, the uplink throughput rate is used to determine an access device used by a terminal device for uplink transmission, and the downlink throughput rate is used to determine an access device used by the terminal device for downlink transmission. The access device sends the first throughput rate to a first routing device. In this way, a route of the backhaul link is dynamically adjusted, fluctuation of a wireless backhaul rate is reduced, and reliability of the backhaul link is improved.

<u>200</u>

```
┌───────────────┐                               ┌───────────────┐
│ Access device │                               │ First routing │
│               │                               │    device     │
└───────────────┘                               └───────────────┘
        │                                                 │
        │ S210: Determine a first throughput rate of a    │
        │ backhaul link at a first moment, where the      │
        │ first throughput rate includes an uplink        │
        │ throughput rate and/or a downlink throughput    │
        │ rate, the uplink throughput rate is used to     │
        │ determine an access device used by a terminal   │
        │ device for uplink transmission, and the         │
        │ downlink throughput rate is used to determine   │
        │ an access device used by the terminal device    │
        │ for downlink transmission                       │
        │                                                 │
        │ ──── S220: Send the first throughput rate ────▶ │
        │                                                 │
        │           S230-1: Determine, based on the       │
        │           uplink throughput rate in the first   │
        │           throughput rate, the access device    │
        │           used by the terminal device for       │
        │           uplink transmission                   │
```

FIG. 3

**Description**

This application claims priority to Chinese Patent Application No. 202111266759.0, filed with the China National Intellectual Property Administration on October 28, 2021 and entitled "COMMUNICATION METHOD, APPARATUS, AND DEVICE, AND STORAGE MEDIUM", which is incorporated herein by reference in its entirety.

**TECHNICAL FIELD**

This application relates to the field of communication technologies, and in particular, to a communication method, apparatus, and device, and a storage medium.

**BACKGROUND**

In some communication systems, for example, in a 5th generation mobile communication system (5th generation wireless system, 5G), displacement of vehicle-mounted access devices changes relative to a network device in a vehicle traveling process, and a channel of a backhaul link changes accordingly. Especially in a cell handover process, there is an abrupt change in a backhaul capability of the backhaul link. When such a sudden change occurs, a data transmission capability between a vehicle-mounted terminal and a network device or a data transmission capability between a vehicle-mounted terminal and another terminal via a network provided by the network device cannot meet a service requirement, resulting in poor communication quality. Currently, a communication connection between a terminal device and the network device is implemented based on a fixed access device, and reliability of the backhaul link cannot be ensured.

**SUMMARY**

Embodiments of this application provide a communication method, apparatus, and device, and a storage medium.

According to a first aspect, an embodiment of this application provides a communication method, including: An access device determines a first throughput rate of a backhaul link at a first moment. The first throughput rate includes an uplink throughput rate and/or a downlink throughput rate, the uplink throughput rate is used to determine an access device used by a terminal device for uplink transmission, and the downlink throughput rate is used to determine an access device used by the terminal device for downlink transmission. The access device sends the first throughput rate to a first routing device.

According to the communication method provided in the first aspect, the access device determines the first throughput rate of the backhaul link at the first moment, and sends the first throughput rate to the first routing device, so that the first routing device determines, based on the uplink throughput rate of the backhaul link at the first moment, the access device for uplink transmission. In this way, a route of the backhaul link is dynamically adjusted, fluctuation of a wireless backhaul rate is reduced, and reliability of the backhaul link is improved.

In a possible implementation, that an access device determines a first throughput rate of a backhaul link at a first moment includes: The access device determines the first throughput rate based on a reference signal received power of the backhaul link at the first moment.

According to the communication method provided in this implementation, the access device can accurately determine the first throughput rate at the first moment based on the reference signal received power.

In a possible implementation, that the access device determines the first throughput rate based on a reference signal received power of the backhaul link at the first moment includes: The access device determines a modulation order based on the reference signal received power of the backhaul link at the first moment; and the access device determines the first throughput rate based on the modulation order, a code rate corresponding to the modulation order, and a resource element RE configured for the access device.

According to the communication method provided in this implementation, the corresponding modulation order is obtained based on the reference signal received power at the first moment, and the code rate corresponding to the modulation order is obtained, thereby determining the first throughput rate, and improving accuracy of implementing the first throughput rate.

In a possible implementation, the first moment is later than a current moment, and the method further includes: The access device determines the reference signal received power at the first moment based on a reference signal received power that is measured at the current moment and a path loss function.

According to the communication method provided in this implementation, the reference signal received power at the first moment that is later than the current moment can be predicted, to determine the first throughput rate at the first moment based on the predicted reference signal power. Compared with a throughput rate at the current moment, the first throughput rate can more accurately reflect a backhaul capability of the backhaul link at the first moment.

In a possible implementation, that the access device determines a modulation order based on the reference signal received power of the backhaul link at the first moment includes: The access device determines a first correspondence based on historical data, where the first correspondence is a correspondence between the reference signal received power and the modulation order. The access device determines a corresponding modulation order based on the reference signal received power of the backhaul link at the first moment and the first correspondence.

According to the communication method provided in this implementation, the modulation order that is determined by the access device based on the historical data and that corresponds to the reference signal received power is relatively accurate, so that the first throughput rate is determined based on the modulation order and the code rate corresponding to the modulation order, thereby improving accuracy of the first throughput rate.

In a possible implementation, that the access device determines the first throughput rate based on the modulation order, a code rate corresponding to the modulation order, and a resource element RE configured for the access device includes: The access device calculates a product of a first quantity of REs, a quantity of data streams, the modulation order, and the code rate corresponding to the modulation order, and then calculates a quotient of the product and duration of a time unit, to obtain the uplink throughput rate; and/or The access device calculates a product of a second quantity of REs, the quantity of data streams, the modulation order, and the code rate corresponding to the modulation order, and then calculates a quotient of the product and the duration of the time unit, to obtain the uplink throughput rate. The first quantity of REs is a difference between a quantity of REs configured for the access device and a quantity of uplink overhead REs, and the second quantity of REs is a difference between the quantity of REs configured for the access device and a quantity of downlink overhead REs.

In a possible implementation, that the access device sends the first throughput rate to a routing device includes: The access device sends the first throughput rate to the first routing device in a wired transmission manner.

According to the communication method provided in this implementation, the first throughput rate is transmitted between the access device and the first routing device in a wired transmission manner, so that when the access device and the first routing device are installed on, for example, a mobile device of a vehicle, communication reliability is higher.

In a possible implementation, that the access device sends the first throughput rate to a first routing device includes: The access device generates first information based on a tag-length-value TLV format in a link layer discovery protocol LLDP. The first information includes first indication information, and the first indication information indicates whether the first information includes the uplink throughput rate and/or the downlink throughput rate. When the first indication information indicates that the first information includes the uplink throughput rate, the first information further includes information about the uplink throughput rate. When the first indication information indicates that the first information includes the downlink throughput rate, the first information further includes information about the downlink throughput rate. The access device sends the first information to the first routing device.

According to a second aspect, an embodiment of this application provides a communication method, including: A first routing device obtains a first throughput rate of a backhaul link at a first moment; when the first throughput rate includes an uplink throughput rate, the first routing device determines, based on the uplink throughput rate, an access device used by a terminal device for uplink transmission; and/or when the first throughput rate includes a downlink throughput rate, the first routing device sends the downlink throughput rate to a second routing device.

In a possible implementation, that a first routing device obtains a first throughput rate of a backhaul link at a first moment includes: The first routing device receives, in a wired transmission manner, the first throughput rate sent by the access device.

In a possible implementation, that a first routing device obtains a first throughput rate of a backhaul link at a first moment includes: The first routing device receives first information from the access device. The first information is information conforming to a TLV format in an LLDP. The first information includes first indication information, and the first indication information indicates whether the first information includes the uplink throughput rate and/or the downlink throughput rate. When the first indication information indicates that the first information includes the uplink throughput rate, the first information further includes information about the uplink throughput rate. When the first indication information indicates that the first information includes the downlink throughput rate, the first information further includes information about the downlink throughput rate.

In a possible implementation, that the first routing device sends the downlink throughput rate to a second routing device includes: The first routing device performs data encapsulation according to a routing encapsulation protocol to obtain a first data packet, where a packet header of the first data packet includes the information about the downlink throughput rate. The first routing device sends the first data packet to the second routing device.

In a possible implementation, the method further includes: The first routing device determines that service priorities of a plurality of downlink data packets are high priorities. The first routing device reorders the plurality of received downlink data packets based on sequence numbers of the downlink data packets. The first routing device sends the reordered downlink data packets to the terminal device.

For beneficial effects of the communication method provided in the second aspect and the possible implementations of the second aspect, refer to the beneficial effects brought by the first aspect and the possible implementations of the first aspect. Details are not described herein again.

According to a third aspect, an embodiment of this application provides a communication method, including: A second routing device obtains a downlink throughput rate of a backhaul link at a first moment. The second routing device determines, based on the downlink throughput rate, an access device used by a terminal device for downlink transmission.

In a possible implementation, that a second routing device obtains a downlink throughput rate of a backhaul link at a first moment includes: The second routing device receives a first data packet sent by a first routing device, where a packet header of the first data packet includes information about the downlink throughput rate.

In a possible implementation, the method further includes: The second routing device determines that service priorities of a plurality of uplink data packets are high priorities. The second routing device reorders the plurality of received uplink data packets based on sequence numbers of the uplink data packets. The second routing device sends the reordered uplink data packets to the network device.

For beneficial effects of the communication method provided in the third aspect and the possible implementations of the third aspect, refer to the beneficial effects brought by the first aspect and the possible implementations of the first aspect. Details are not described herein again.

According to a fourth aspect, an embodiment of this application provides a communication apparatus, including: a processing unit, configured to determine a first throughput rate of a backhaul link at a first moment, where the first throughput rate includes an uplink throughput rate and/or a downlink throughput rate, the uplink throughput rate is used to determine an access device used by a terminal device for uplink transmission, and the downlink throughput rate is used to determine an access device used by the terminal device for downlink transmission; and a transceiver unit, configured to send the first throughput rate to a first routing device.

In a possible implementation, the processing unit is specifically configured to: determine the first throughput rate based on a reference signal received power of the backhaul link at the first moment.

In a possible implementation, the processing unit is specifically configured to: determine a modulation order based on the reference signal received power of the backhaul link at the first moment; and determine the first throughput rate based on the modulation order, a code rate corresponding to the modulation order, and a resource element RE configured for the communication apparatus.

In a possible implementation, the processing unit is further configured to: determine the reference signal received power at the first moment based on a reference signal received power that is measured at a current moment and a path loss function, where the first moment is later than the current moment.

In a possible implementation, the processing unit is specifically configured to: determine a first correspondence based on historical data, where the first correspondence is a correspondence between the reference signal received power and the modulation order; and determine a corresponding modulation order based on the reference signal received power of the backhaul link at the first moment and the first correspondence.

In a possible implementation, the processing unit is specifically configured to: calculate a product of a first quantity of REs, a quantity of data streams, the modulation order, and the code rate corresponding to the modulation order, and then calculate a quotient of the product and duration of a time unit, to obtain the uplink throughput rate; and/or calculate a product of a second quantity of REs, the quantity of data streams, the modulation order, and the code rate corresponding to the modulation order, and then calculate a quotient of the product and the duration of the time unit, to obtain the uplink throughput rate, where The first quantity of REs is a difference between a quantity of REs configured for the access device and a quantity of uplink overhead REs, and the second quantity of REs is a difference between the quantity of REs configured for the access device and a quantity of downlink overhead REs.

In a possible implementation, the transceiver unit is specifically configured to: send the first throughput rate to the first routing device in a wired transmission manner.

In a possible implementation, the transceiver unit is specifically configured to: generate first information based on a tag-length-value TLV format in a link layer discovery protocol LLDP, where the first information includes first indication information, the first indication information indicates whether the first information includes the uplink throughput rate and/or the downlink throughput rate, when the first indication information indicates that the first information includes the uplink throughput rate, the first information further includes information about the uplink throughput rate, and when the first indication information indicates that the first information includes the downlink throughput rate, the first information further includes information about the downlink throughput rate; and send the first information to the first routing device.

For beneficial effects of the communication apparatus provided in the fourth aspect and the possible implementations of the fourth aspect, refer to the beneficial effects brought by the first aspect and the possible implementations of the first aspect. Details are not described herein again.

According to a fifth aspect, an embodiment of this application provides a communication apparatus, including: a transceiver unit, configured to obtain a first throughput rate of a backhaul link at a first moment; and a processing unit, configured to determine, based on an uplink throughput rate in the first throughput rate, an access device used by a terminal device for uplink transmission. The transceiver unit sends a downlink throughput rate in the first throughput rate to a second routing device.

In a possible implementation, the transceiver unit is specifically configured to: receive, in a wired transmission manner, the first throughput rate sent by the access device.

In a possible implementation, the transceiver unit is specifically configured to: receive first information from the access device. The first information is information conforming to a TLV format in an LLDP. The first information includes first indication information, and the first indication information indicates whether the first information includes the uplink throughput rate and/or the downlink throughput rate. When the first indication information indicates that the first information includes the uplink throughput rate, the first information further includes information about the uplink throughput rate. When the first indication information indicates that the first information includes the downlink throughput rate, the first information further includes information about the downlink throughput rate.

In a possible implementation, the transceiver unit is specifically configured to: perform data encapsulation according to a routing encapsulation protocol to obtain a first data packet, where a packet header of the first data packet includes the information about the downlink throughput rate; and send the first data packet to the second routing device.

In a possible implementation, the processing unit is further configured to determine that service priorities of a plurality of downlink data packets are high priorities. The processing unit is further configured to reorder the plurality of received downlink data packets based on sequence numbers of the downlink data packets. The transceiver unit is further configured to send the reordered downlink data packets to the terminal device.

For beneficial effects of the communication apparatus provided in the fifth aspect and the possible implementations of the fifth aspect, refer to the beneficial effects brought by the first aspect and the possible implementations of the first aspect. Details are not described herein again.

According to a sixth aspect, an embodiment of this application provides a communication apparatus, including: a transceiver unit, configured to obtain a downlink throughput rate of a backhaul link at a first moment; and a processing unit, configured to determine, based on the downlink throughput rate, an access device used by a terminal device for downlink transmission.

In a possible implementation, the transceiver unit is specifically configured to: receive a first data packet sent by a first routing device, where a packet header of the first data packet includes information about the downlink throughput rate.

In a possible implementation, the processing unit is further configured to determine that service priorities of a plurality of uplink data packets are high priorities. The processing unit is further configured to reorder the plurality of received uplink data packets based on sequence numbers of the uplink data packets. The transceiver unit is further configured to send the reordered uplink data packets to a network device.

For beneficial effects of the communication apparatus provided in the sixth aspect and the possible implementations of the sixth aspect, refer to the beneficial effects brought by the first aspect and the possible implementations of the first aspect. Details are not described herein again.

According to a seventh aspect, an embodiment of this application provides a communication device, including a processor and a memory. The memory is configured to store a computer program, and the processor is configured to invoke and run the computer program stored in the memory, to perform the method in the first aspect, the second aspect, the third aspect, or the possible implementations.

According to an eighth aspect, an embodiment of this application provides a chip, including a processor configured to invoke computer instructions from a memory and run the computer instructions, so that a device installed with the chip performs the method in the first aspect, the second aspect, the third aspect, or the possible implementations.

According to a ninth aspect, an embodiment of this application provides a computer-readable storage medium configured to store computer program instructions, and when the computer program instructions are run, a computer to perform the method in the first aspect, the second aspect, the third aspect, or the possible implementations.

According to a tenth aspect, an embodiment of this application provides a computer program product, including computer program instructions. The computer program instructions enable a computer to perform the method in the first aspect, the second aspect, the third aspect, or the possible implementations.

**BRIEF DESCRIPTION OF DRAWINGS**

FIG. 1 is a schematic diagram of an architecture of a wireless backhaul system 100 to which an embodiment of this application is applied;
FIG. 2 is a schematic diagram of a backhaul link connection manner according to this application;
FIG. 3 is a schematic flowchart of a communication method 200 according to an embodiment of this application;
FIG. 4 is a schematic diagram of a reference signal received power according to an embodiment of this application;
FIG. 5 is a schematic flowchart of a communication method 300 according to an embodiment of this application;

FIG. 6 is a schematic diagram of transmission of a downlink service data stream according to an embodiment of this application;

FIG. 7 is a schematic block diagram of a communication apparatus according to an embodiment of this application; and

FIG. 8 is another schematic block diagram of a communication apparatus according to an embodiment of this application.

## DESCRIPTION OF EMBODIMENTS

The following describes technical solutions of this application with reference to accompanying drawings.

A communication method provided in this application may be applied to various communication systems, for example, a long term evolution (Long Term Evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a future 5th generation (5th Generation, 5G) mobile communication system or a new radio access technology (new radio access technology, NR), and three application scenarios of the 5G mobile communication system: enhanced mobile broadband (enhanced mobile broadband, eMBB), ultra-reliable low latency communication (ultra-reliable low latency communication, uRLLC), and massive machine-type communication (massive machine-type communication, mMTC), a device-to-device (device-to-device, D2D) communication system, a satellite communication systems, an internet of things (internet of things, IoT), a narrowband internet of things (narrow band internet of things, NB-IoT) system, a global system for mobile communication (global system for mobile communication, GSM), an enhanced data rate for GSM evolution (enhanced data rate for GSM evolution, EDGE) system, a wideband code division multiple access (wideband code division multiple access, WCDMA) system, a code division multiple access 2000 (code division multiple access, CDMA2000) system, and a time division-synchronization code division multiple access (time division-synchronization code division multiple access, TD-SCDMA) system. The 5G mobile communication system may include a non-standalone (non-standalone, NSA) 5G mobile communication system and/or a standalone (standalone, SA) 5G mobile communication system.

The communication method provided in this application may be further applied to a future communication system, for example, a 6th generation mobile communication system. This is not limited in this application.

The communication method provided in this application is applicable to any backhaul system in any scenario of the foregoing communication systems, and is particularly applicable to a wireless backhaul system.

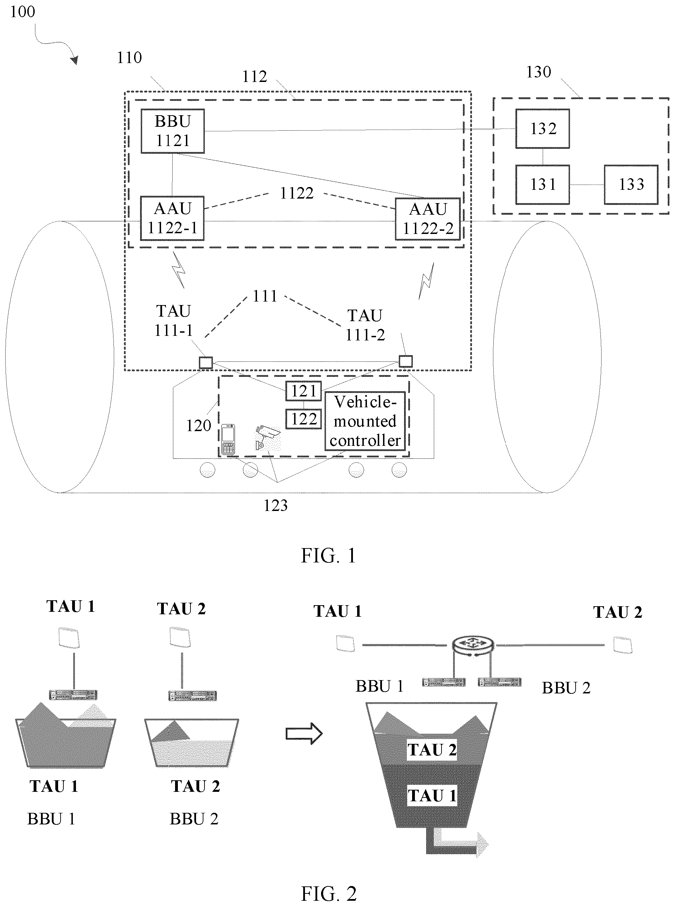

FIG. 1 is a schematic diagram of an architecture of a wireless backhaul system 100 to which an embodiment of this application is applied. As shown in FIG. 1, a scenario in which a device in a vehicle communicates with a network device is used as an example. The wireless backhaul system 100 includes a train-to-ground backhaul subsystem 110, a vehicle-mounted access subsystem 120, and a core network subsystem 130. The train-to-ground backhaul subsystem 110 is connected to the vehicle-mounted access subsystem 120 and the core network subsystem 130 in a wireless manner, so that the vehicle-mounted access subsystem 120 is connected to a network to perform uplink and downlink data backhaul.

With reference to FIG. 1, the train-to-ground backhaul subsystem 110 includes an access device 111 and a backhaul base station 112. The access device 111 may include one or more train access units (Train Access Unit, TAU), for example, a TAU 111-1 and a TAU 111-2 in FIG. 1. Optionally, the backhaul base station 112 may include a baseband processing unit (base band unit, BBU) 1121 and an active antenna processing unit (active antenna unit, AAU) 1122. There may be a plurality of AAUs 1122, for example, 1122-1 and 1122-2 in FIG. 1, and the plurality of AAUs 1122 may be evenly distributed. For example, when a vehicle runs in a tunnel, the AAUs may be evenly deployed on a tunnel wall at intervals along a traveling direction of the vehicle.

Optionally, the plurality of AAUs 1122 may be divided into a plurality of AAU groups, and the plurality of AAUs in the AAU groups may be in a one-to-one correspondence with the plurality of TAUs deployed in the vehicle. With reference to FIG. 1, the AAU 1122-1 and the AAU 1122-2 are one AAU group. When the vehicle travels from left to right in FIG. 1, the AAU 1122-1 communicates with the TAU 111-1 at the rear of the vehicle, and the AAU 1122-2 may communicate with the TAU 111-2 at the head of the vehicle.

With reference to FIG. 1, the vehicle-mounted access subsystem 120 includes a vehicle-mounted backhaul router 121, a vehicle-mounted base station 122, and a terminal device 123. The vehicle-mounted base station 122 provides a network service for a device in the vehicle, and the vehicle-mounted backhaul router 121 may select different access devices (for example, the TAU 111-1 or the TAU 111-2) for uplink data transmission.

The terminal device 123 may be any intelligent terminal that needs a network service. For example, the terminal device 123 may include a vehicle controller, a wireless terminal in self driving (self driving), an intelligent display device, an intelligent monitoring device, and the like that are deployed in the vehicle. For another example, the terminal device 123 may further include a mobile phone (mobile phone), a tablet computer (Pad), a computer with a wireless sending and receiving function, a virtual reality (virtual reality, VR) terminal device, an augmented reality (augmented reality, AR) terminal device, a vehicle-mounted device, a wearable device that are used in the vehicle, a terminal device in a 5G network, a terminal device in a future evolved public land mobile communication network (public land mobile network, PLMN), and the like.

The wearable device may also be referred to as a wearable intelligent device, and is a general term of wearable devices, such as glasses, gloves, watches, clothes, and shoes, that are developed and intelligently designed for daily wear by using a wearable technology. The wearable device is a portable device that is worn directly on a body or integrated into a user's clothing or accessories. The wearable device is not only a hardware device, but also implements a powerful function through software support, data exchange, and cloud interaction. In a broad sense, a wearable intelligent device includes a device that provides a complete function, has a large size, and can implement all or some functions without relying on a smartphone, for example, a smartwatch or smart glasses; and includes a device that focuses only on a specific type of application function and needs to be used in combination with another device such as a smartphone, for example, various smart bands and smart jewelry used for vital sign monitoring.

In addition, the terminal device 123 may alternatively be a terminal device in an internet of things (Internet of things, IoT) system. The IoT is an important part in future development of information technologies. A main technical feature of the IoT is to connect things to a network by using a communication technology, to implement an intelligent network for human-machine interconnection and thing-thing interconnection. The IoT technology can implement massive connections, deep coverage, and terminal power saving by using, for example, a narrow band (narrow band, NB) technology.

In addition, the terminal device 123 may further include sensors such as an intelligent printer and a vehicle detector, and main functions include: collecting data (which is a function of some terminal devices), receiving control information and downlink data of a network device, sending an electromagnetic wave, transmitting uplink data to the network device, and the like.

With reference to FIG. 1, the core network subsystem 130 includes a backhaul core network router 131, a backhaul core network 132, and a vehicle-mounted base station core network 133.

The backhaul core network router 131 may transparently transmit downlink data between the vehicle-mounted base station core network 133 and the backhaul core network 132, and select different access devices (for example, the TAU 131) for the downlink data to perform data backhaul.

The backhaul core network 132 establishes a connection to the access device 111 (for example, the TAU 111-1 and/or the TAU 111-1), manages the access device 111, and completes bearer setup for a service, and serves as a bearer network to provide an interface to an external network.

The vehicle-mounted base station core network 133 provides a connection to the terminal device 123, manages the terminal device 123, and completes bearer setup for a service.

It should be understood that the wireless backhaul system 100 is merely an example, and the wireless backhaul system 100 may include more or fewer components than those in FIG. 1.

It should be further understood that the vehicle in the wireless backhaul system 100 may be a train, an automobile, a self-driving vehicle, or the like. Alternatively, the vehicle may be replaced with any movable device such as an airplane, a ship, or an intelligent robot.

It should be further understood that the vehicle travelling in a tunnel in the wireless backhaul system 100 is merely an example, but should not constitute any limitation on this application. For example, the vehicle may further travel on the ground, may travel in the air when the vehicle is replaced with an airplane, and may travel on water when the vehicle is replaced with a ship. Correspondingly, the AAU 1122 may also be deployed on land, in the air, on water, or the like. This is not limited in this application.

Communication between a network device (for example, any base station, routing device, or gateway in FIG. 1) and a terminal device, and communication between terminal devices may be performed through a licensed spectrum (licensed spectrum), or may be performed through an unlicensed spectrum (unlicensed spectrum), or may be performed through both the licensed spectrum and the unlicensed spectrum. The communication between the network device and the terminal device and the communication between the terminal devices may be performed through a spectrum below 6 GHz, or through a spectrum above 6 GHz, or through both the spectrum below 6 GHz and the spectrum above 6 GHz. A spectrum resource used between the network device and the terminal device is not limited in this embodiment of this application.

It should be understood that specific forms of the network device and the terminal device are not limited in this application.

In the wireless backhaul system 100 shown in FIG. 1, in a traveling process of the vehicle, a channel of a backhaul link between the TAU (for example, the TAU 111-1 or the TAU 111-2) and the backhaul base station 112 changes in real time. In a cell handover process, a backhaul capability changes abruptly. When such a sudden change occurs, transmission between the terminal device and the network device cannot meet a service requirement, resulting in poor communication quality of the terminal device.

In addition, with reference to FIG. 2, currently, backhaul links of a TAU 1 and a TAU 2 are independent, and each TAU is respectively connected to a BBU of the TAU. In this case, rate fluctuation easily causes data transmitted on the backhaul link to exceed a link bearing capacity.

For the foregoing problem, in this embodiment of this application, routing devices are connected to each access device, and a throughput rate of a backhaul link is reported to the routing device by using the access device. In this way, the routing device determines, based on the throughput rate reported by each access device, an access device for data transmission, and properly uses transmission resources of backhaul links corresponding to a plurality of access devices. For example, rate fluctuation of the TAU 1 and the TAU 2 in FIG. 2 compensates for each other, to avoid that transmission data carried by some TAUs is not saturated while transmission data carried by other TAUs exceeds a bearing capacity. In this way, a route of a backhaul link can be dynamically adjusted, thereby improving reliability of the backhaul link.

That the routing device determines the access device based on the throughput rate reported by each access device may also be expressed as that the routing device selects, based on the throughput rate reported by each access device, one access device to perform data transmission. The terms "determining" and "selecting" are used interchangeably below, and the two have a same meaning.

The following describes a communication method in embodiments of this application with reference to the accompanying drawings.

It should be understood that, for ease of understanding and description, the following describes in detail the method provided in embodiments of this application by using interaction between an access device and a routing device (including a first routing device and/or a second routing device) as an example. The access device may be, for example, the access device 111 (for example, may be the TAU 111-1 and the TAU 111-2) in FIG. 1, the first routing device may be, for example, the vehicle-mounted router 121 in FIG. 1, and the second routing device may be, for example, the backhaul core network router 131 in FIG. 1.

However, it should be understood that this should not constitute any limitation on an execution body of the method provided in this application. Any device that can perform, by using a program that records code of the method provided in embodiments of this application, the method provided in embodiments of this application may be used as an execution body of the method provided in embodiments of this application. For example, the access device shown in the following embodiments may also be replaced with a component in the access device, for example, a chip, a chip system, or another functional module that can invoke and execute a program. The routing device may also be replaced with a component in the routing device, for example, a chip, a chip system, or another functional module that can invoke and execute a program.

It should be further understood that the first routing device may be integrated into the access device. In other words, the access device may be integrated into the first routing device.

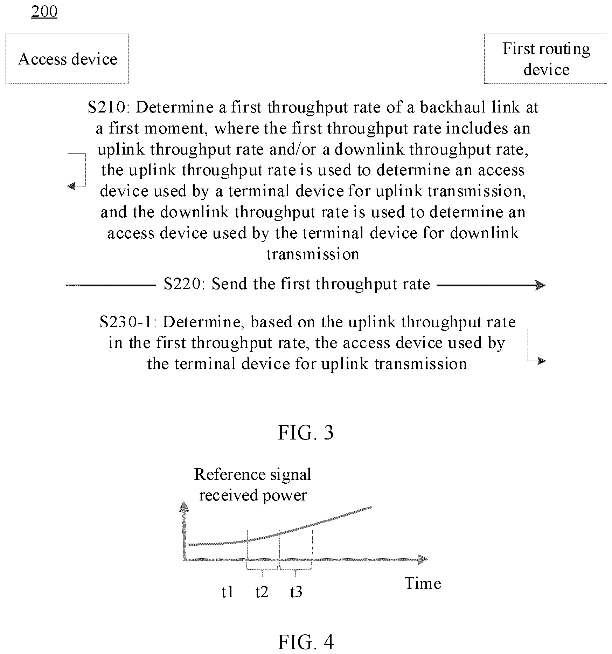

FIG. 3 is a schematic flowchart of a communication method 200 according to an embodiment of this application. As shown in FIG. 2, the method 200 may include S210 to S230-1. The following describes steps in the method 200 in detail.

S210: An access device determines a first throughput rate of a backhaul link at a first moment, where the first throughput rate includes an uplink throughput rate and/or a downlink throughput rate, the uplink throughput rate is used to determine an access device used by a terminal device for uplink transmission, and the downlink throughput rate is used to determine an access device used by the terminal device for downlink transmission.

S220: The access device sends the first throughput rate to a first routing device.

Correspondingly, the first routing device obtains the first throughput rate of the backhaul link at the first moment.

S230-1: The first routing device determines, based on the uplink throughput rate in the first throughput rate, the access device used by the terminal device for uplink transmission.

It should be noted that the backhaul link may be a transmission link between the access device and a network device, and the network device may be a base station, a core network, or the like.

The uplink throughput rate reflects an uplink backhaul rate capability of the backhaul link, and the downlink throughput rate reflects a downlink backhaul rate capability of the backhaul link. Optionally, the first moment may be a current moment, or may be later than the current moment. When the first moment is later than the current moment, the first throughput rate may be a prediction result based on a current measurement value.

In embodiments of this application, both the access device and the first routing device are configured to implement communication between the terminal device and the network device, or communication between the terminal device and another terminal device by using a network. In other words, with assistance of the access device and the first routing device, the terminal device can send uplink data (that is, uplink transmission) to the network device, or receive downlink data (that is, downlink transmission) sent by the network device.

In an implementation of S210, the access device may determine the first throughput rate based on a reference signal received power of the backhaul link at the first moment. It should be noted that the reference signal received power may be obtained by the access device through measurement at the first moment, and the reference signal received power may be usually represented by SSB RSRP, namely, a reference signal received power (reference signal received power, RSRP) measured on a synchronization signal block (synchronization signal block, SSB).

A case that the first moment is the current moment or a case that the first moment is later than the current moment is separately described in the following.

Manner 1: When the first moment is the current moment, S210 includes some or all of the following processes:

S211: The access device may determine a modulation order based on the reference signal received power.

S212: The access device determines the first throughput rate based on the modulation order, a code rate corresponding to the modulation order, and a resource element (Resource element, RE) configured for the access device.

In an implementation of S211, the access device may determine, based on the reference signal received power and a first correspondence, the modulation order corresponding to the reference signal received power. The first correspondence is a correspondence between the reference signal received power and the modulation order. Optionally, the first correspondence may be preset or configured by the network device, or the first correspondence may be generated by the access device based on historical data. For example, the historical data may be stored by the access device. The historical data includes SSB RSRPs and modulation orders during communication at a plurality of historical moments. Refer to Table 1. A value of each SSB RSRP corresponds to one modulation and coding scheme (modulation and coding scheme, MCS) index (Index) $I_{MCS}$, and each MCS index has a unique modulation order (Modulation Order) $Q_m$ in an MCS mapping relationship.

**Table 1**

| SSB RSRP | MCS index |
| --- | --- |
| -80 | 27 |
| -83 | 25 |
| -87 | 22 |

For the MCS mapping relationship, refer to the following Table 2.

**Table 2**

| MCS index | Modulation order | Code rate (code rate) |
| --- | --- | --- |
| $I_{MCS}$ | $Q_m$ | |
| 0 | 2 | 0.1171875 |
| 1 | 2 | 0.1533203 |
| 2 | 2 | 0.1884766 |
| 3 | 2 | 0.2451172 |
| 4 | 2 | 0.3007813 |
| 5 | 2 | 0.3701172 |
| 6 | 2 | 0.4384766 |
| 7 | 2 | 0.5136719 |
| 8 | 2 | 0.5878906 |
| 9 | 2 | 0.6630859 |
| 10 | 4 | 0.3320313 |
| 11 | 4 | 0.3691406 |
| 12 | 4 | 0.4238281 |
| 13 | 4 | 0.4785156 |
| 14 | 4 | 0.5400391 |
| 15 | 4 | 0.6015625 |
| 16 | 4 | 0.6425781 |

(continued)

| MCS index | Modulation order | Code rate (code rate) |
|---|---|---|
| $I_{MCS}$ | $Q_m$ | |
| 17 | 6 | 0.4277344 |
| 18 | 6 | 0.4550781 |
| 19 | 6 | 0.5048828 |
| 20 | 6 | 0.5537109 |
| 21 | 6 | 0.6015625 |
| 22 | 6 | 0.6503906 |
| 23 | 6 | 0.7021484 |
| 24 | 6 | 0.7539063 |
| 25 | 6 | 0.8027344 |
| 26 | 6 | 0.8525391 |
| 27 | 6 | 0.8886719 |
| 28 | 6 | 0.9257813 |

It may be understood that the MCS mapping relationship may include more or fewer items (columns) than those in Table 2, for example, may further include a target code rate, spectrum utilization, and the like.

As shown in Table 2, in an MCS correspondence, the MCS index is not only in a one-to-one correspondence with the modulation order, the MCS index is also in a one-to-one correspondence with the code rate, and the modulation order is in a one-to-one correspondence with the code rate. In this case, the access device may determine, based on the first correspondence, the modulation order and the code rate that corresponds to the reference signal received power of the backhaul link at the first moment.

Further, in S212, the access device may determine the first throughput rate based on the modulation order determined in S211, the code rate corresponding to the modulation order, and the RE configured for the access device.

For example, the access device may calculate a product of a first quantity of REs, a quantity of data streams, the modulation order, and the code rate corresponding to the modulation order, and then calculate a quotient of the product and duration of a time unit, to obtain the uplink throughput rate. The formula is as follows:

Uplink throughput rate = First quantity of REs * Quantity of data streams * Code rate * Modulation order/Duration of a time unit.

For another example, the access device may calculate a product of a second quantity of REs, the quantity of data streams, the modulation order, and the code rate corresponding to the modulation order, and then calculate a quotient of the product and the duration of the time unit, to obtain the uplink throughput rate. The formula is as follows:

Downlink throughput rate = Second quantity of REs * Quantity of data streams * Code rate * Modulation order/Duration of a time unit.

It should be noted that both the first quantity of REs and the second quantity of REs may be determined based on the RE configured for the access device. For example, the first quantity of REs is a difference between a quantity of REs configured for the access device and a quantity of uplink overhead REs, and the second quantity of REs is a difference between the quantity of REs configured for the access device and a quantity of downlink overhead REs. The quantity of uplink overhead REs may include, for example, common channel and pilot signal overheads used for uplink transmission, and the quantity of downlink overhead REs may include, for example, common channel and pilot signal overheads used for downlink transmission. Optionally, the quantity of uplink overhead REs may be a first preset value, for example, is preset to 25% of the quantity of configured REs. Similarly, the quantity of downlink overhead REs may be a second preset value, for example, is preset to 20% of the quantity of configured REs.

The quantity of data streams may also be referred to as a rank (RANK) number, and may be determined based on a channel condition measurement value. Optionally, the quantity of data streams may be a preset quantity of data streams. For example, the quantity of data streams is 2.

The time unit may be duration of a slot, a subframe, a radio frame, or the like. In this embodiment, the time unit may be a slot, and the duration of the time unit is duration of each slot, for example, may be 0.125 ms.

The quantity of REs configured for the access device may be determined based on configuration information. For example, Quantity of REs = Quantity of symbols in each slot * Quantity of resource blocks (Resource Block, RB) in each carrier * Quantity of subcarriers in each RB * Quantity of carriers. The quantity of symbols in each slot is, for example, 14, the quantity of RBs in each carrier is, for example, 66, the quantity of subcarriers in each RB is, for example, 12, and the quantity of carriers may be, for example, 1, 2, 4, or 8.

Manner 2: When the first moment is later than the current moment, S210 includes some or all of the following processes:

S213: The access device determines the reference signal received power at the first moment based on a reference signal received power that is measured at the current moment and a path loss function.

S211: The access device may determine a modulation order based on the reference signal received power.

S212: The access device determines the first throughput rate based on the modulation order, a code rate corresponding to the modulation order, and an RE configured for the access device.

In S213, the access device needs to predict the reference signal received power at the first moment based on the reference signal received power at the current moment.

With reference to FIG. 4, it is assumed that the access device obtains the reference signal received power based on a preset period, the current moment is a moment t2, and the first moment is a moment t3. In this case, the reference signal received power F(t3) at the first moment satisfies the following formula:

$$F(t3) = F(t2) + Pathloss\ [(t3 - t2) * v].$$

F(t2) is the reference signal received power at the current moment, v represents a traveling velocity of a vehicle, and Pathloss is a path loss function of a radio link for the vehicle to travel. A subway tunnel scenario is used as an example, and a corrected tunnel scenario function Pathloss = 32.4 + 20 * log10(f) + 19 * log10(d). f represents operating frequencies of the access device and the network device, and a unit is GHz. d represents a distance, and d = (t3 - t2) * v.

In some embodiments, the access device may determine, based on a reference signal received power at a historical moment, that an F(t) function is a monotonically increasing function or a monotonically decreasing function, and predict the reference signal received power at the first moment according to different formulas based on whether the F(t) function is an increasing function or a decreasing function. For example, in FIG. 4, if a reference signal received power F(t1) at a moment t1 is less than F(t2), the F(t) function is a monotonically increasing function, and the reference signal received power F(t3) at the first moment satisfies the following formula: F(t3) = F(t2) + Pathloss [(t3 - t2) * v]. If the reference signal received power F(t1) at the moment t1 is greater than F(t2), the F(t) function is a monotonically decreasing function, and the reference signal received power F(t3) at the first moment satisfies the following formula: F(t3) = F(t2) - Pathloss [(t3 - t2) * v].

It should be understood that a coefficient of the path loss function may be adjusted based on different environment conditions.

Further, the access device determines the corresponding modulation order based on the predicted reference signal received power at the first moment, to determine the first throughput rate.

S211 and S212 in this embodiment of this application are the same as S211, S212, and the implementations in Manner 1. Details are not described herein again.

For S220, it should be noted that the access device and the first routing device may be connected in a wired manner, and the access device sends the first throughput rate to the routing device in a wired transmission manner.

For example, the access device generates first information based on a tag-length-value (tag length value, TLV) format in a link layer discovery protocol (link layer discovery protocol, LLDP). The first information includes first indication information, and the first indication information indicates whether the first information includes the uplink throughput rate and/or the downlink throughput rate. When the first indication information indicates that the first information includes information about the uplink throughput rate, the first information further includes the information about the uplink throughput rate. When the first indication information indicates that the first information includes the downlink throughput rate, the first information further includes information about the downlink throughput rate. Further, the access device sends the first information to the first routing device.

The access device may write the information about the uplink throughput rate and/or the information about the downlink throughput rate based on a newly added TLV source (for example, a system capability (System Capability) field) of the LLDP. For example, a sequence number 9 is added to a reserved (Reserved) bit in the TLV, to indicate the uplink throughput rate and/or the downlink throughput rate. Refer to the following Table 3.

**Table 3**

| TLV | Downlink rate flag bit (first indication information) | Rate value | Uplink rate flag bit (first indication information) | Rate value | Reserved bit |
|---|---|---|---|---|---|
| 7 bits | 1 bit | 7 bits | 1 bit | 7 bits | 9 bits |
| A value is 9 | 1 represents available, and 0 represents unavailable | A unit is 100 Mbps. Rate = Bits to decimal * 100 Mbps | 1 represents available, and 0 represents unavailable | A unit is 10 Mbps. Rate = Bits to decimal * 10 Mbps | None |

Optionally, the access device may send the first information based on an LLDP sending interval, or may send the first information based on a preset interval. For example, the preset sending interval may be 1s.

It should be noted that, that the access device sends the throughput rate to the routing device according to the LLDP is merely an example, and does not constitute any limitation on this application. The access device may alternatively transmit information by using another protocol or a customized transmission protocol. This is not limited in this application.

It should be understood that this embodiment of this application is described by using an example in which the access device and the first routing device are connected in a wired manner. However, this does not constitute any limitation on this application. For example, in this embodiment of this application, the access device and the first routing device may still be connected in a wireless manner.

For S230-1, it should be noted that the first routing device may obtain uplink throughput rates respectively sent by a plurality of access devices. For example, the first routing device in FIG. 1 may receive uplink throughput rates respectively reported by the TAU 111-1 and the TAU 111-2, and select a TAU with a higher uplink throughput rate as the access device used by the terminal device for uplink transmission. Alternatively, the first routing device may use an uplink throughput rate sent by each access device as a determining factor for selecting the access device, and comprehensively determine, together with a determining factor in another dimension, the access device used by the terminal device for uplink transmission.

In this embodiment of this application, the access device determines the first throughput rate of the backhaul link at the first moment, and sends the first throughput rate to the first routing device, so that the first routing device determines, based on the uplink throughput rate of the backhaul link at the first moment, the access device for uplink transmission. In this way, a route of the backhaul link is dynamically adjusted, fluctuation of a wireless backhaul rate is reduced, and reliability of the backhaul link is improved.

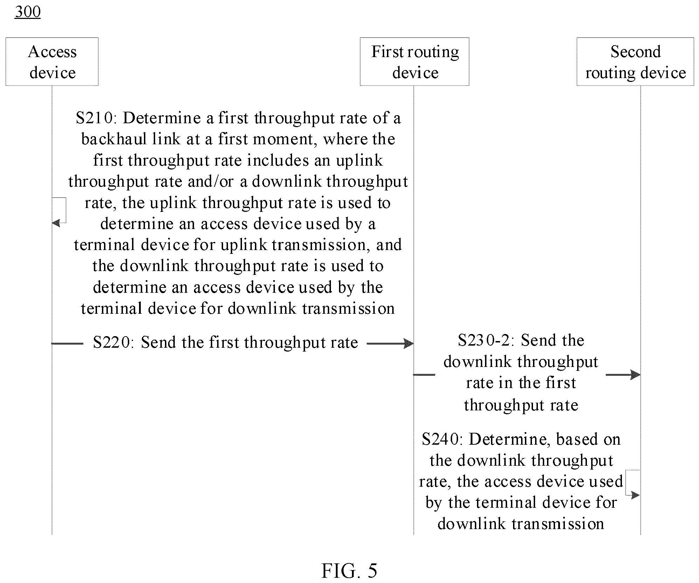

FIG. 5 is a schematic flowchart of a communication method 300 according to an embodiment of this application. As shown in FIG. 5, the method 300 may include S210 to S240. The following describes steps in the method 300 in detail.

S210: An access device determines a first throughput rate of a backhaul link at a first moment, where the first throughput rate includes an uplink throughput rate and/or a downlink throughput rate, the uplink throughput rate is used to determine an access device used by a terminal device for uplink transmission, and the downlink throughput rate is used to determine an access device used by the terminal device for downlink transmission.

S220: The access device sends the first throughput rate to a first routing device.

Correspondingly, the first routing device obtains the first throughput rate of the backhaul link at the first moment.

S230-2: The first routing device sends the downlink throughput rate in the first throughput rate to a second routing device.

Correspondingly, the second routing device obtains the downlink throughput rate of the backhaul link at the first moment.

S240: The second routing device determines, based on the downlink throughput rate, the access device used by the terminal device for downlink transmission.

S210 and S220 are the same as S210 and S220 shown in FIG. 3, and have implementations that are the same as S210 and S220 in FIG. 3. Details are not described herein again.

In S230-2, as an example, the first routing device performs data encapsulation according to a routing encapsulation protocol to obtain a first data packet. A packet header of the first data packet includes information about the downlink throughput rate, and sends the first data packet to the second routing device.

The first routing device and the second routing device are connected in a wireless manner. For example, the first routing device may transmit the downlink throughput rate to the second routing device by using a generic routing encapsulation (generic routing encapsulation, GRE) protocol.

For example, the first routing device may use a Reserved1 field in a GRE header to transfer the downlink throughput rate. After receiving the first throughput rate sent by the access device, the first routing device encapsulates the downlink throughput rate into a Reserved1 field in a GRE header of the uplink data packet (namely, the first data packet). The second routing device extracts the downlink throughput rate from the GRE header of the received packet.

Optionally, the Reserved1 field is 16 bits.

The first routing device may send both the uplink throughput rate and the downlink throughput rate in the first throughput rate to the second routing device. An encapsulation and transmission process thereof is similar to the foregoing encapsulation and transmission process, and details are not described herein again.

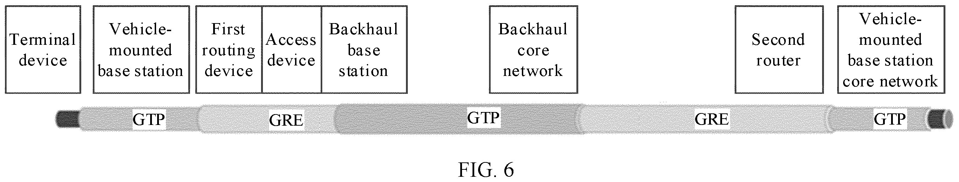

With reference to FIG. 6, in a wireless backhaul system, transmission of a downlink service data stream may include some or all of the following processes:

Step 1: A core network of a vehicle-mounted base station provides encapsulation based on a general packet radio service tunneling protocol user plane (general packet radio service tunneling protocol user plane, GTP-U) format, where the encapsulated data packet includes a transmission address and a port number.

Step 2: A second router encapsulates a GRE protocol packet header in a GTP-U data packet.

Step 3: A backhaul core network uses a GRE data packet as a payload (payload) and performs GTP-U data packet encapsulation again.

Step 4: A backhaul base station receives GTP-U data, decapsulates the GTP-U data, and sends the GTP-U data to an access device (for example, a TAU) through a wireless channel, and then the access device transparently transmits the GTP-U data to the first routing device.

Step 5: The first routing device parses a header of the GRE data packet, and forwards the data to the vehicle-mounted base station.

Step 6: The vehicle-mounted base station parses a GTP-U header and sends the data to the terminal device.

In S240, the second router performs non-equivalent load sharing based on the downlink throughput rate. In other words, the second routing device selects, based on a downlink throughput rate of each access device, a same access device or different access devices to transmit to-be-transmitted service data to the terminal device.

The second routing device may obtain downlink throughput rates respectively sent by a plurality of access devices. For example, the second routing device in FIG. 1 may receive downlink throughput rates that are respectively reported by the TAU 111-1 and the TAU 111-2 and that are forwarded by the first routing device, and select a TAU with a higher downlink throughput rate as the access device for downlink transmission. Alternatively, the second routing device may use a downlink throughput rate sent by each access device as a determining factor for selecting the access device, and comprehensively determine, together with a determining factor in another dimension, the access device for downlink transmission. Alternatively, the second routing device may select a corresponding access device based on a service type of to-be-transmitted downlink data and the downlink throughput rate reported by the access device. For example, when the to-be-transmitted downlink data is a video, the second routing device selects an access device with a higher downlink throughput rate; or when the to-be-transmitted downlink data is a file, the second routing device selects an access device with a lower downlink throughput rate.

In this embodiment of this application, the access device determines the first throughput rate of the backhaul link at the first moment, and sends the first throughput rate to the first routing device. The first routing device sends the first throughput rate or the downlink throughput rate in the first throughput rate to the second routing device, so that the second routing device determines, based on the downlink throughput rate of the backhaul link at the first moment, the access device for downlink transmission. In this way, a route of the backhaul link is dynamically adjusted, fluctuation of a wireless backhaul rate is reduced, and reliability of the backhaul link is improved.

On the basis of any one of the foregoing embodiments, to prevent a packet loss in a transmission process, the second routing device may add sequence numbers to a plurality of to-be-transmitted downlink data packets in a downlink data transmission process. For example, in a GRE encapsulation process, a packet sequence number (Sequence Number) field of a GRE header indicates a sequence number of each downlink data packet. After receiving the plurality of downlink data packets, the first routing device may reorder the downlink data packets based on sequence numbers of the downlink data packets.

Optionally, to improve processing efficiency, the second routing device may determine, based on a service priority of a to-be-transmitted downlink data packet, whether to add a sequence number to the to-be-transmitted downlink data packet. For example, the second routing device may add a sequence number to a data packet corresponding to a service having a high quality of service (quality of service, QoS) requirement. For example, for services such as large file downloading and web page browsing, a packet loss is allowed, and a QoS requirement is relatively low. That is, a service priority is relatively low. For services such as voices and games, tolerance for a packet loss is relatively low, and a QoS requirement is relatively high. That is, a service priority is relatively high.

Similar to downlink transmission, the first routing device may add sequence numbers to a plurality of to-be-transmitted uplink data packets in an uplink data transmission process. For example, in a data packet encapsulation process, a sequence number field of a GRE header indicates a sequence number of each uplink data packet. After receiving the plurality of uplink data packets, the second routing device may reorder the uplink data packets based on sequence numbers of the uplink data packets.

Similar to downlink transmission, the first routing device may add a sequence number to an uplink data packet corresponding to a service having a high QoS requirement, namely, an uplink data packet having a high service priority.

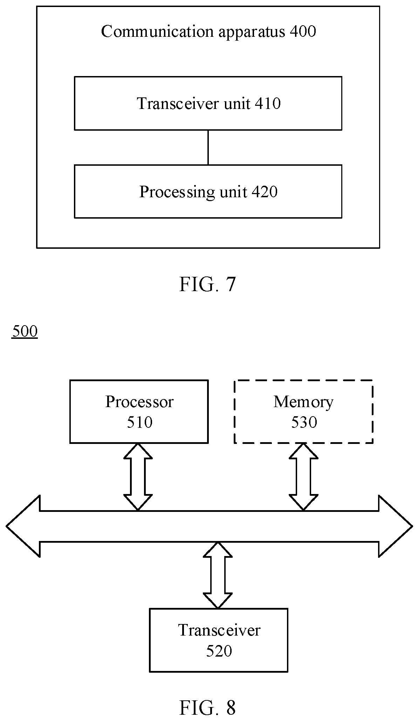

The foregoing describes in detail the methods provided in embodiments of this application with reference to FIG. 3 to FIG. 6. The following describes in detail apparatuses provided in embodiments of this application with reference to FIG. 7 and FIG. 8.

FIG. 7 is a schematic block diagram of a communication apparatus according to an embodiment of this application. As shown in FIG. 7, the apparatus 400 may include a transceiver unit 410 and a processing unit 420.

Optionally, the communication apparatus 400 may correspond to the access device in the foregoing method embodiments, for example, may be an access device or a component (for example, a chip or a chip system) disposed in the access device.

It should be understood that the communication apparatus 400 may correspond to the access device in the method 200 shown in FIG. 3 or the method 300 shown in FIG. 5 according to embodiments of this application. The communication apparatus 400 may include units configured to perform the method performed by the access device in the method 200 in FIG. 3 or the method 300 in FIG. 5. In addition, the units in the communication apparatus 400 and the foregoing other operations and/or functions are separately intended to implement corresponding procedures of the method in FIG. 3 or the method in FIG. 5.

When the communication apparatus 400 is configured to perform the method in FIG. 3 or FIG. 5, the processing unit 420 may be configured to determine a first throughput rate of a backhaul link at a first moment. The first throughput rate includes an uplink throughput rate and/or a downlink throughput rate, the uplink throughput rate is used to determine an access device used by a terminal device for uplink transmission, and the downlink throughput rate is used to determine an access device used by the terminal device for downlink transmission. The transceiver unit 410 may be configured to send the first throughput rate to a first routing device.

In some embodiments, the processing unit 420 is specifically configured to: determine the first throughput rate based on a reference signal received power of the backhaul link at the first moment.

In some embodiments, the processing unit 420 is specifically configured to: determine a modulation order based on the reference signal received power of the backhaul link at the first moment; and determine the first throughput rate based on the modulation order, a code rate corresponding to the modulation order, and a resource element RE configured for the communication apparatus.

In some embodiments, the first moment is later than a current moment, and the processing unit 420 is further configured to: determine the reference signal received power at the first moment based on the reference signal received power that is measured at the current moment and a path loss function.

In some embodiments, the processing unit 420 is specifically configured to: determine a first correspondence based on historical data, where the first correspondence is a correspondence between the reference signal received power and the modulation order; and determine a corresponding modulation order based on the reference signal received power of the backhaul link at the first moment and the first correspondence.

In some embodiments, the processing unit 420 is specifically configured to: calculate a product of a first quantity of REs, a quantity of data streams, the modulation order, and the code rate corresponding to the modulation order, and then calculate a quotient of the product and duration of a time unit, to obtain the uplink throughput rate; and/or calculate a product of a second quantity of REs, the quantity of data streams, the modulation order, and the code rate corresponding to the modulation order, and then calculate a quotient of the product and the duration of the time unit, to obtain the uplink throughput rate. The first quantity of REs is a difference between a quantity of REs configured for the access device and a quantity of uplink overhead REs, and the second quantity of REs is a difference between the quantity of REs configured for the access device and a quantity of downlink overhead REs.

In some embodiments, the transceiver unit 410 is specifically configured to: send the first throughput rate to the first routing device in a wired transmission manner.

In some embodiments, the transceiver unit 410 is specifically configured to: generate first information based on a tag-length-value TLV format in a link layer discovery protocol LLDP, where the first information includes first indication information, the first indication information indicates whether the first information includes the uplink throughput rate and/or the downlink throughput rate, when the first indication information indicates that the first information includes the uplink throughput rate, the first information further includes information about the uplink throughput rate, and when the first indication information indicates that the first information includes the downlink throughput rate, the first information further includes information about the downlink throughput rate; and send the first information to the first routing device.

It should be understood that the transceiver unit 410 may be configured to perform step 220 in the method shown in FIG. 3 or FIG. 5, and the processing unit 420 may be configured to perform step 210 in the method shown in FIG. 3 or FIG. 5. It should be understood that a specific process in which the units perform the foregoing corresponding steps is described in detail in the foregoing method embodiments. For brevity, details are not described herein again.

Optionally, the communication apparatus 400 may correspond to the first routing device in the foregoing method embodiment, for example, may be the first routing device, or a component (for example, a chip or a chip system) disposed in the first routing device.

It should be understood that the communication apparatus 400 may correspond to the first routing device in the method shown in FIG. 3 or FIG. 5 according to embodiments of this application. The communication apparatus 400 may include units configured to perform the method performed by the first routing device in the method 200 in FIG. 3 or the method 300 in FIG. 5. In addition, the units in the communication apparatus 400 and the foregoing other operations and/or functions are separately intended to implement corresponding procedures of the method in FIG. 3 or FIG. 5.

When the communication apparatus 400 is configured to perform the method in FIG. 3 or FIG. 5, the transceiver unit 410 may be configured to obtain a first throughput rate of a backhaul link at a first moment. When the first throughput rate includes an uplink throughput rate, the processing unit 420 may be configured to determine, based on the uplink throughput rate, an access device used by a terminal device for uplink transmission; and/or when the first throughput rate includes a downlink throughput rate, the transceiver unit 410 sends the downlink throughput rate to a second routing device.

In some embodiments, the transceiver unit 410 is specifically configured to: receive, in a wired transmission manner, the first throughput rate sent by the access device.

In some embodiments, the transceiver unit 410 is specifically configured to: receive first information from the access device. The first information is information conforming to a TLV format in an LLDP. The first information includes first indication information, and the first indication information indicates whether the first information includes the uplink throughput rate and/or the downlink throughput rate. When the first indication information indicates that the first information includes the uplink throughput rate, the first information further includes information about the uplink throughput rate. When the first indication information indicates that the first information includes the downlink throughput rate, the first information further includes information about the downlink throughput rate.

In some embodiments, the transceiver unit 410 is specifically configured to: perform data encapsulation according to a routing encapsulation protocol to obtain a first data packet, where a packet header of the first data packet includes the information about the downlink throughput rate; and send the first data packet to the second routing device.

In some embodiments, the processing unit 420 determines that service priorities of a plurality of downlink data packets are high priorities. The processing unit 420 reorders the plurality of received downlink data packets based on sequence numbers of the downlink data packets. The transceiver unit 410 sends the reordered downlink data packets to the terminal device.

It should be understood that the transceiver unit 410 may be configured to perform step 220 in the method shown in FIG. 3 and step 230-2 in the method shown in FIG. 5, and the processing unit 420 may be configured to perform step 230-1 in the method shown in FIG. 3. It should be understood that a specific process in which the units perform the foregoing corresponding steps is described in detail in the foregoing method embodiments. For brevity, details are not described herein again.

Optionally, the communication apparatus 400 may correspond to the second routing device in the foregoing method embodiment, for example, may be the second routing device, or a component (for example, a chip or a chip system) disposed in the second routing device.

It should be understood that the communication apparatus 400 may correspond to the second routing device in the method 300 shown in FIG. 5 according to embodiments of this application. The communication apparatus 400 may include units configured to perform the method performed by the second routing device in the method in FIG. 5. In addition, the units in the communication apparatus 400 and the foregoing other operations and/or functions are separately intended to implement corresponding procedures of the method in FIG. 5.

When the communication apparatus 400 is configured to perform the method in FIG. 5, the transceiver unit 410 is configured to obtain a downlink throughput rate of a backhaul link at a first moment; and the processing unit 420 is configured to determine, based on the downlink throughput rate, an access device used by a terminal device for downlink transmission.

In some embodiments, the transceiver unit 410 is specifically configured to: receive a first data packet sent by a first routing device, where a packet header of the first data packet includes information about the downlink throughput rate.

In some embodiments, the processing unit 420 determines that service priorities of a plurality of uplink data packets are high priorities. The processing unit 420 reorders the plurality of received uplink data packets based on sequence numbers of the uplink data packets. The transceiver unit 410 sends the reordered uplink data packets to a network device.

It should be understood that the transceiver unit 410 may be configured to perform step 230-2 in the method shown in FIG. 5, and the processing unit 420 may be configured to perform step 240 in the method shown in FIG. 5. It should be understood that a specific process in which the units perform the foregoing corresponding steps is described in detail in the foregoing method embodiments. For brevity, details are not described herein again.

When the communication apparatus 400 is the access device, the transceiver unit 410 in the communication apparatus 400 may be implemented by using a transceiver, for example, may correspond to a transceiver 520 in a communication apparatus 500 shown in FIG. 8. The processing unit 420 in the communication apparatus 400 may be implemented by using at least one processor, for example, may correspond to a processor 510 in the communication apparatus 500 shown in FIG. 8.

When the communication apparatus 400 is the first routing device, the transceiver unit 410 in the communication apparatus 400 may be implemented by using a transceiver, for example, may be corresponding to a transceiver 520 in a communication apparatus 500 shown in FIG. 8. The processing unit 420 in the communication apparatus 400 may be implemented by using at least one processor, for example, may be corresponding to a processor 510 in the communication apparatus 500 shown in FIG. 8.

When the communication apparatus 400 is the second routing device, the transceiver unit 410 in the communication apparatus 400 may be implemented by using a transceiver, for example, may be corresponding to a transceiver 520 in a communication apparatus 500 shown in FIG. 8. The processing unit 420 in the communication apparatus 400 may be implemented by using at least one processor, for example, may be corresponding to a processor 510 in the communication apparatus 500 shown in FIG. 8.

When the communication apparatus 400 is a chip or a chip system disposed in a communication device (for example, the access device, the first routing device, or the second routing device), the transceiver unit 410 in the communication apparatus 400 may be implemented by using an input/output interface, a circuit, or the like, and the processing unit 420 in the communication apparatus 400 may be implemented by using a processor, a microprocessor, an integrated circuit, or the like that is integrated in the chip or the chip system.

FIG. 8 is another schematic block diagram of a communication apparatus according to an embodiment of this application. As shown in FIG. 8, the communication apparatus 500 may include: a processor 510, a transceiver 520, and a memory 530. The processor 510, the transceiver 520, and the memory 530 communicate with each other through an internal connection path. The memory 530 is configured to store instructions. The processor 510 is configured to execute the instructions stored in the memory 530, to control the transceiver 520 to send a signal and/or receive a signal.

It should be understood that the communication apparatus 500 may correspond to the access device, the first routing device, or the second routing device in the foregoing method embodiments, and may be configured to perform steps and/or procedures performed by the access device, the first routing device, or the second routing device in the foregoing method embodiments. Optionally, the memory 530 may include a read-only memory and a random access memory, and provide instructions and data to the processor. A part of the memory may further include a non-volatile random access memory. The memory 530 may be a separate component, or may be integrated in the processor 510. The processor 510 may be configured to execute the instructions stored in the memory 530. When the processor 510 executes the instructions stored in the memory, the processor 510 is configured to perform the steps and/or procedures corresponding to the terminal device or the network device in the foregoing method embodiments.

Optionally, the communication apparatus 500 is the access device in the foregoing embodiments.

Optionally, the communication apparatus 500 is the first routing device in the foregoing embodiments.

Optionally, the communication apparatus 500 is the second routing device in the foregoing embodiments.

The transceiver 520 may include a transmitter and a receiver. The transceiver 520 may further include an antenna. There may be one or more antennas. The processor 510, the memory 530, and the transceiver 520 may be devices integrated in different chips. For example, the processor 510 and the memory 530 may be integrated in a baseband chip, while the transceiver 520 may be integrated in a radio frequency chip. The processor 510, the memory 530, and the transceiver 520 may alternatively be devices integrated in a same chip. This is not limited in this application.

Optionally, the communication apparatus 500 is a component disposed in the access device, for example, a chip or a chip system.

Optionally, the communication apparatus 500 is a component configured in the first routing device, for example, a chip or a chip system.

Optionally, the communication apparatus 500 is a component configured in the second routing device, for example, a chip or a chip system.

The transceiver 520 may alternatively be a communication interface, for example, an input/output interface or a circuit. The transceiver 520, the processor 510, and the memory 530 may all be integrated in a same chip, for example, integrated in a baseband chip.

This application further provides a processing apparatus, including at least one processor. The at least one processor is configured to execute a computer program stored in a memory, so that the processing apparatus performs the method performed by the access device in the foregoing method embodiments or the method performed by the network device in the foregoing method embodiments.

An embodiment of this application further provides a processing apparatus, including a processor and an input/output interface. The input/output interface is coupled to the processor. The input/output interface is configured to input and/or output information. The information includes at least one of instructions and data. The processor is configured to execute a computer program, so that the processing apparatus performs the method performed by the access device in the foregoing method embodiments or the method performed by the network device in the foregoing method embodiments.

Embodiments of this application further provide a processing apparatus, including a processor and a memory. The memory is configured to store a computer program, and the processor is configured to invoke the computer program from the memory and run the computer program, so that the processing apparatus performs the method performed by the access device, the method performed by the first routing device, or the method performed by the second routing device in the foregoing method embodiments.

It should be understood that the processing apparatus may be one or more chips. For example, the processing apparatus may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processing circuit (digital signal processor, DSP), a micro controller (micro controller unit, MCU), a programmable logic device (programmable logic device, PLD), or another integrated chip.

In an implementation process, steps in the foregoing methods can be implemented by using a hardware integrated logical circuit in the processor, or by using instructions in a form of software. The steps of the method disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. Various methods, steps, and logical block diagrams disclosed in embodiments of this application may be implemented or executed. The general-purpose processor may be a microprocessor, or the processor may be any conventional processor or the like. The steps of the methods disclosed with reference to embodiments of this application may be directly performed by a hardware decoding processor, or may be performed by a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a nonvolatile memory, or may include both a volatile memory and a nonvolatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), which serves as an external cache. By way of example but non-limiting description, RAMs in many forms are available, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the system and method described in this specification includes, but is not limited to, these and any other suitable type of memory.

According to the methods provided in embodiments of this application, this application further provides a computer program product. The computer program product includes computer program code. When the computer program code is run on a computer, the computer is enabled to perform the method performed by the access device, the first routing device, or the second routing device according to the foregoing method embodiments.

According to the method provided in embodiments of this application, this application further provides a computer-readable storage medium. The computer-readable storage medium stores program code. When the program code is run on a computer, the computer is enabled to perform the method performed by the access device, the first routing device, or the second routing device in the foregoing method embodiments.

According to the method provided in embodiments of this application, this application further provides a communication system. The communication system may include the access device, the first routing device, and the second routing device.

Terms such as "component", "module", and "system" used in this specification are used to indicate computer-related entities, hardware, firmware, a combination of hardware and software, software, or software being executed. For example, a component may be, but is not limited to, a process running on a processor, a processor, an object, an executable file, a thread of execution, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process, for example, based on a signal having one or more data packets (for example, data from two components interacting with another component in a local system, a distributed system, and/or across a network such as the Internet interacting with other systems by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be indirect couplings or communication connections by using some interfaces, apparatuses, or units, and may also be connection in electrical, mechanical, or other forms.

The units described as separate components may be or may not be physically separated, and the components displayed as units may be or may not be physical units, that is, may be located in one place or distributed on a plurality of network units. Some or all of the units may be selected according to actual needs to achieve the objective of the solutions of embodiments.

In addition, the functional units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, a part essentially contributing to the technical solutions of this application or a part of the technical solutions may be embodied in a form of a software product. The computer software product is stored in a storage medium, and includes several instructions for enabling a computer device (which may be a personal computer, a server, a network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

   determining, by an access device, a first throughput rate of a backhaul link at a first moment, wherein the first throughput rate comprises an uplink throughput rate and/or a downlink throughput rate, the uplink throughput rate is used to determine an access device used by a terminal device for uplink transmission, and the downlink throughput rate is used to determine an access device used by the terminal device for downlink transmission; and

sending, by the access device, the first throughput rate to a first routing device.

2. The method according to claim 1, wherein the determining, by an access device, a first throughput rate of a backhaul link at a first moment comprises:
determining, by the access device, the first throughput rate based on a reference signal received power of the backhaul link at the first moment.

3. The method according to claim 2, wherein the determining, by the access device, the first throughput rate based on a reference signal received power of the backhaul link at the first moment comprises:

    determining, by the access device, a modulation order based on the reference signal received power of the backhaul link at the first moment; and
    determining, by the access device, the first throughput rate based on the modulation order, a code rate corresponding to the modulation order, and a resource element RE configured for the access device.

4. The method according to claim 3, wherein the first moment is later than a current moment, and the method further comprises:
determining, by the access device, the reference signal received power at the first moment based on a reference signal received power that is measured at the current moment and a path loss function.

5. The method according to claim 3 or 4, wherein the determining, by the access device, a modulation order based on the reference signal received power of the backhaul link at the first moment comprises:

    determining, by the access device, a first correspondence based on historical data, wherein the first correspondence is a correspondence between the reference signal received power and the modulation order; and
    determining, by the access device, a corresponding modulation order based on the reference signal received power of the backhaul link at the first moment and the first correspondence.

6. The method according to any one of claims 3 to 5, wherein the determining, by the access device, the first throughput rate based on the modulation order, a code rate corresponding to the modulation order, and a resource element RE configured for the access device comprises:

    calculating, by the access device, a product of a first quantity of REs, a quantity of data streams, the modulation order, and the code rate corresponding to the modulation order, and then calculating a quotient of the product and duration of a time unit, to obtain the uplink throughput rate; and/or
    calculating, by the access device, a product of a second quantity of REs, the quantity of data streams, the modulation order, and the code rate corresponding to the modulation order, and then calculating a quotient of the product and the duration of the time unit, to obtain the uplink throughput rate, wherein
    the first quantity of REs is a difference between a quantity of REs configured for the access device and a quantity of uplink overhead REs, and the second quantity of REs is a difference between the quantity of REs configured for the access device and a quantity of downlink overhead REs.

7. The method according to any one of claims 1 to 6, wherein the sending, by the access device, the first throughput rate to a routing device comprises:
sending, by the access device, the first throughput rate to the first routing device in a wired transmission manner.

8. The method according to claim 7, wherein the sending, by the access device, the first throughput rate to a first routing device comprises:

    generating, by the access device, first information based on a tag-length-value TLV format in a link layer discovery protocol LLDP, wherein the first information comprises first indication information, the first indication information indicates whether the first information comprises the uplink throughput rate and/or the downlink throughput rate, when the first indication information indicates that the first information comprises the uplink throughput rate, the first information further comprises information about the uplink throughput rate, and when the first indication information indicates that the first information comprises the downlink throughput rate, the first information further comprises information about the downlink throughput rate; and
    sending, by the access device, the first information to the first routing device.

9. A communication method, comprising:

   obtaining, by a first routing device, a first throughput rate of a backhaul link at a first moment;
   when the first throughput rate comprises an uplink throughput rate, determining, by the first routing device, based on the uplink throughput rate, an access device used by a terminal device for uplink transmission; and/or
   when the first throughput rate comprises a downlink throughput rate, sending, by the first routing device, the downlink throughput rate to a second routing device.

10. The method according to claim 9, wherein the obtaining, by a first routing device, a first throughput rate of a backhaul link at a first moment comprises:
    receiving, by the first routing device in a wired transmission manner, the first throughput rate sent by the access device.

11. The method according to claim 10, wherein the obtaining, by a first routing device, a first throughput rate of a backhaul link at a first moment comprises:
    receiving, by the first routing device, first information from the access device, wherein the first information is information conforming to a TLV format in an LLDP, the first information comprises first indication information, the first indication information indicates whether the first information comprises the uplink throughput rate and/or the downlink throughput rate, when the first indication information indicates that the first information comprises the uplink throughput rate, the first information further comprises information about the uplink throughput rate, and when the first indication information indicates that the first information comprises the downlink throughput rate, the first information further comprises information about the downlink throughput rate.

12. The method according to any one of claims 9 to 11, wherein the sending, by the first routing device, the downlink throughput rate to a second routing device comprises:

    performing, by the first routing device, data encapsulation according to a routing encapsulation protocol to obtain a first data packet, wherein a packet header of the first data packet comprises the information about the downlink throughput rate; and
    sending, by the first routing device, the first data packet to the second routing device.

13. The method according to any one of claims 9 to 12, wherein the method further comprises:

    determining, by the first routing device, that service priorities of a plurality of downlink data packets are high priorities;
    reordering, by the first routing device, the plurality of received downlink data packets based on sequence numbers of the downlink data packets; and
    sending, by the first routing device, the reordered downlink data packets to the terminal device.

14. A communication method, comprising:

    obtaining, by a second routing device, a downlink throughput rate of a backhaul link at a first moment; and
    determining, by the second routing device based on the downlink throughput rate, an access device used by a terminal device for downlink transmission.

15. The method according to claim 14, wherein the obtaining, by a second routing device, a downlink throughput rate of a backhaul link at a first moment comprises:
    receiving, by the second routing device, a first data packet sent by a first routing device, wherein a packet header of the first data packet comprises information about the downlink throughput rate.

16. The method according to claim 14 or 15, wherein the method further comprises:

    determining, by the second routing device, that service priorities of a plurality of uplink data packets are high priorities;
    reordering, by the second routing device, the plurality of received uplink data packets based on sequence numbers of the uplink data packets; and
    sending, by the second routing device, the reordered uplink data packets to a network device.

17. A communication apparatus, comprising:

a processing unit, configured to determine a first throughput rate of a backhaul link at a first moment, wherein the first throughput rate comprises an uplink throughput rate and/or a downlink throughput rate, the uplink throughput rate is used to determine an access device used by a terminal device for uplink transmission, and the downlink throughput rate is used to determine an access device used by the terminal device for downlink transmission; and
a transceiver unit, configured to send the first throughput rate to a first routing device.

18. The apparatus according to claim 17, wherein the processing unit is specifically configured to:
determine the first throughput rate based on a reference signal received power of the backhaul link at the first moment.

19. The apparatus according to claim 18, wherein the processing unit is specifically configured to:

determine a modulation order based on the reference signal received power of the backhaul link at the first moment; and
determine the first throughput rate based on the modulation order, a code rate corresponding to the modulation order, and a resource element RE configured for the communication apparatus.

20. The apparatus according to claim 19, wherein the processing unit is further configured to:
determine the reference signal received power at the first moment based on a reference signal received power that is measured at a current moment and a path loss function, wherein the first moment is later than the current moment.

21. The apparatus according to claim 19 or 20, wherein the processing unit is specifically configured to:

determine a first correspondence based on historical data, wherein the first correspondence is a correspondence between the reference signal received power and the modulation order; and
determine a corresponding modulation order based on the reference signal received power of the backhaul link at the first moment and the first correspondence.

22. The apparatus according to any one of claims 19 to 21, wherein the processing unit is specifically configured to:

calculate a product of a first quantity of REs, a quantity of data streams, the modulation order, and the code rate corresponding to the modulation order, and then calculate a quotient of the product and duration of a time unit, to obtain the uplink throughput rate; and/or
calculate a product of a second quantity of REs, the quantity of data streams, the modulation order, and the code rate corresponding to the modulation order, and then calculate a quotient of the product and the duration of the time unit, to obtain the uplink throughput rate, wherein
the first quantity of REs is a difference between a quantity of REs configured for the communication apparatus and a quantity of uplink overhead REs, and the second RE quantity is a difference between a quantity of REs configured for the access device and a quantity of downlink overhead REs.

23. The apparatus according to any one of claims 17 to 22, wherein the transceiver unit is specifically configured to:
send the first throughput rate to the first routing device in a wired transmission manner.

24. The apparatus according to claim 23, wherein the transceiver unit is specifically configured to:

generate first information based on a tag-length-value TLV format in a link layer discovery protocol LLDP, wherein the first information comprises first indication information, the first indication information indicates whether the first information comprises the uplink throughput rate and/or the downlink throughput rate, when the first indication information indicates that the first information comprises the uplink throughput rate, the first information further comprises information about the uplink throughput rate, and when the first indication information indicates that the first information comprises the downlink throughput rate, the first information further comprises information about the downlink throughput rate; and
send the first information to the first routing device.

25. A communication apparatus, comprising:

a transceiver unit, configured to obtain a first throughput rate of a backhaul link at a first moment; and
a processing unit, configured to determine, based on an uplink throughput rate in the first throughput rate, an access device used by a terminal device for uplink transmission, and/or, the transceiver unit is further configured to send a downlink throughput rate in the first throughput rate to a second routing device.

26. The apparatus according to claim 25, wherein the transceiver unit is specifically configured to:
    receive, in a wired transmission manner, the first throughput rate sent by the access device.

27. The apparatus according to claim 26, wherein the transceiver unit is specifically configured to:
    receive first information from the access device, wherein the first information is information conforming to a TLV format in an LLDP, the first information comprises first indication information, the first indication information indicates whether the first information comprises the uplink throughput rate and/or the downlink throughput rate, when the first indication information indicates that the first information comprises the uplink throughput rate, the first information further comprises information about the uplink throughput rate, and when the first indication information indicates that the first information comprises the downlink throughput rate, the first information further comprises information about the downlink throughput rate.

28. The apparatus according to any one of claims 25 to 27, wherein the transceiver unit is specifically configured to:

    perform data encapsulation according to a routing encapsulation protocol to obtain a first data packet, wherein a packet header of the first data packet comprises the information about the downlink throughput rate; and
    send the first data packet to the second routing device.

29. The apparatus according to any one of claims 25 to 28, wherein

    the processing unit is further configured to determine that service priorities of a plurality of downlink data packets are high priorities;
    the processing unit is further configured to reorder the plurality of received downlink data packets based on sequence numbers of the downlink data packets; and
    the transceiver unit is further configured to send the reordered downlink data packets to the terminal device.

30. A communication apparatus, comprising:

    a transceiver unit, configured to obtain a downlink throughput rate of a backhaul link at a first moment; and
    a processing unit, configured to determine, based on the downlink throughput rate, an access device used by a terminal device for downlink transmission.

31. The apparatus according to claim 30, wherein the transceiver unit is specifically configured to:
    receive a first data packet sent by a first routing device, wherein a packet header of the first data packet comprises information about the downlink throughput rate.

32. The apparatus according to claim 30 or 31, wherein

    the processing unit is further configured to determine that service priorities of a plurality of uplink data packets are high priorities;
    the processing unit is further configured to reorder the plurality of received uplink data packets based on sequence numbers of the uplink data packets; and
    the transceiver unit is further configured to send the reordered uplink data packets to a network device.

33. A communication device, comprising a processor and a memory, wherein the memory is configured to store a computer program, and the processor is configured to invoke and run the computer program stored in the memory, to perform the method according to any one of claims 1 to 16.

34. A chip, comprising a processor, configured to invoke computer instructions from a memory and run the computer instructions, so that a device installed with the chip performs the method according to any one of claims 1 to 16.

35. A computer-readable storage medium, configured to store computer program instructions, wherein when the computer program instructions are run, a computer to perform the method according to any one of claims 1 to 16.

36. A computer program product, comprising computer program instructions, wherein the computer program instructions enable a computer to perform the method according to any one of claims 1 to 16.

100

110

112

130

BBU
1121

132

131

133

1122

AAU
1122-1

AAU
1122-2

TAU
111-1

111

TAU
111-2

121

122

Vehicle-
mounted
controller

120

123

FIG. 1

TAU 1

TAU 2

TAU 1

TAU 2

TAU 1

TAU 2

BBU 1

BBU 2

TAU 2

TAU 1

TAU 1

TAU 2

BBU 1

BBU 2

FIG. 2

200

| Access device | | First routing device |

S210: Determine a first throughput rate of a backhaul link at a first moment, where the first throughput rate includes an uplink throughput rate and/or a downlink throughput rate, the uplink throughput rate is used to determine an access device used by a terminal device for uplink transmission, and the downlink throughput rate is used to determine an access device used by the terminal device for downlink transmission

S220: Send the first throughput rate ⟶

S230-1: Determine, based on the uplink throughput rate in the first throughput rate, the access device used by the terminal device for uplink transmission

FIG. 3

Reference signal received power

t1   t2   t3                Time

FIG. 4

300

| Access device | | First routing device | | Second routing device |
|---|---|---|---|---|

S210: Determine a first throughput rate of a backhaul link at a first moment, where the first throughput rate includes an uplink throughput rate and/or a downlink throughput rate, the uplink throughput rate is used to determine an access device used by a terminal device for uplink transmission, and the downlink throughput rate is used to determine an access device used by the terminal device for downlink transmission

S220: Send the first throughput rate ⟶

S230-2: Send the downlink throughput rate in the first throughput rate

S240: Determine, based on the downlink throughput rate, the access device used by the terminal device for downlink transmission

FIG. 5

| Terminal device | Vehicle-mounted base station | First routing device | Access device | Backhaul base station | Backhaul core network | Second router | Vehicle-mounted base station core network |
|---|---|---|---|---|---|---|---|

GTP | GRE | GTP | GRE | GTP

FIG. 6

Communication apparatus 400

Transceiver unit 410

Processing unit 420

FIG. 7

500

Processor
510

Memory
530

Transceiver
520

FIG. 8

## INTERNATIONAL SEARCH REPORT

| International application No. |
| --- |
| **PCT/CN2022/121897** |

### A.   CLASSIFICATION OF SUBJECT MATTER

H04W 4/44(2018.01)i

According to International Patent Classification (IPC) or to both national classification and IPC

### B.   FIELDS SEARCHED

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNPAT, WPI, EPODOC, CNKI, 3GPP: 吞吐率, 吞吐量, 参考信号接收功率, 上行, 下行, 接入设备, 接入点, 基站, 路由, 确定, 选择, throughput, RSRP, UL, DL, uplink, downlink, access, AP, BS, base station, eNB, gNB, nodeB, determine, select

### C.   DOCUMENTS CONSIDERED TO BE RELEVANT

| Category* | Citation of document, with indication, where appropriate, of the relevant passages | Relevant to claim No. |
| --- | --- | --- |
| PX | CN 114205785 A (HUAWEI TECHNOLOGIES CO., LTD.) 18 March 2022 (2022-03-18) claims 1-30 | 1-36 |
| X | CN 110138472 A (TANGLI (SHANGHAI) INFORMATION TECHNOLOGY CO., LTD.) 16 August 2019 (2019-08-16) description, paragraphs 0004-0023 | 1-36 |
| A | CN 111225424 A (YULONG COMPUTER TELECOMMUNICATION SCIENTIFIC (SHENZHEN) CO., LTD.) 02 June 2020 (2020-06-02) entire document | 1-36 |
| A | CN 106488578 A (HUAWEI TECHNOLOGIES CO., LTD.) 08 March 2017 (2017-03-08) entire document | 1-36 |
| A | CN 104170439 A (HUAWEI TECHNOLOGIES CO., LTD.) 26 November 2014 (2014-11-26) entire document | 1-36 |
| A | CN 111448817 A (HUAWEI TECHNOLOGIES CO., LTD.) 24 July 2020 (2020-07-24) entire document | 1-36 |

☑ Further documents are listed in the continuation of Box C.      ☑ See patent family annex.

| | |
| --- | --- |
| *     Special categories of cited documents: <br> "A"   document defining the general state of the art which is not considered to be of particular relevance <br> "E"   earlier application or patent but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |

| Date of the actual completion of the international search | Date of mailing of the international search report |
| --- | --- |
| **09 November 2022** | **25 November 2022** |

| Name and mailing address of the ISA/CN | Authorized officer |
| --- | --- |
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

| International application No. |
| --- |
| **PCT/CN2022/121897** |

**C. DOCUMENTS CONSIDERED TO BE RELEVANT**

| Category* | Citation of document, with indication, where appropriate, of the relevant passages | Relevant to claim No. |
| --- | --- | --- |
| A | NATIONAL INSTRUMENTS. "Experimental Results on Coexistence of DL LAA and Commodity Wi-Fi Network with Cat 2 LBT" *3GPP TSG RAN WG1 Meeting #82 R1-154740*, 28 August 2015 (2015-08-28), text, section 2 | 1-36 |
| A | WO 2015096092 A1 (HUAWEI TECHNOLOGIES CO., LTD.) 02 July 2015 (2015-07-02) entire document | 1-36 |

Form PCT/ISA/210 (second sheet) (January 2015)

INTERNATIONAL SEARCH REPORT
Information on patent family members

International application No.

**PCT/CN2022/121897**

| Patent document cited in search report | | | Publication date (day/month/year) | Patent family member(s) | | | Publication date (day/month/year) |
|---|---|---|---|---|---|---|---|
| CN | 114205785 | A | 18 March 2022 | None | | | |
| CN | 110138472 | A | 16 August 2019 | None | | | |
| CN | 111225424 | A | 02 June 2020 | None | | | |
| CN | 106488578 | A | 08 March 2017 | None | | | |
| CN | 104170439 | A | 26 November 2014 | WO | 2015139292 | A1 | 24 September 2015 |
| | | | | US | 2017013633 | A1 | 12 January 2017 |
| | | | | EP | 3119134 | A1 | 18 January 2017 |
| CN | 111448817 | A | 24 July 2020 | WO | 2019096028 | A1 | 23 May 2019 |
| | | | | US | 2019149993 | A1 | 16 May 2019 |
| WO | 2015096092 | A1 | 02 July 2015 | CN | 104429144 | A | 18 March 2015 |

Form PCT/ISA/210 (patent family annex) (January 2015)

**REFERENCES CITED IN THE DESCRIPTION**

**Patent documents cited in the description**

* CN 202111266759